# EUROPÄISCHE PATENTSCHRIFT

(11) **EP 2 585 343 B1**
(45) Veröffentlichungstag und Bekanntmachung des Hinweises auf die Patenterteilung: **22.11.2017**
(21) Anmeldenummer: 11735782.2
(22) Anmeldetag: 14.06.2011
(51) Int. Cl.: B60R 16/033, B60L 11/00, B60W 20/00

(54) **KRAFTFAHRZEUG-BORDNETZ UND VERFAHREN ZUM BETREIBEN EINES KRAFTFAHRZEUG-BORDNETZES**
VEHICLE POWER SUPPLY AND METHOD OF OPERATING A VEHICLE POWER SUPPLY
RÉSEAU DE BORD D'UN VÉHICULE ET PROCÉDÉ D'OPÉRATION D'UN RÉSEAU DE BORD

(30) Priorität: 26.06.2010 DE 102010025198
(43) Veröffentlichungstag der Anmeldung: 01.05.2013
(73) Patentinhaber: Volkswagen Aktiengesellschaft, 38440 Wolfsburg (DE)
(72) Erfinder: BUCHZIK, Oliver, 38518 Gifhorn (DE); HOMMEL, Mathias, 38518 Gifhorn (DE)
(86) Internationale Anmeldenummer: PCT/EP2011/002903
(87) Internationale Veröffentlichungsnummer: WO 2011/160783

(56) Entgegenhaltungen:
- EP-A1- 2 065 268
- DE-A1-102007 052 750

## Beschreibung

Die Erfindung betrifft ein Kraftfahrzeug-Bordnetz und ein Verfahren zum Betreiben eines Kraftfahrzeug-Bordnetzes.

Kraftfahrzeug-Bordnetze mit einem DC/DC-Wandler mit einer Hochspannungsseite und einer Niederspannungsseite, wobei an der Hochspannungsseite mindestens eine Traktionsbatterie angeschlossen ist und an der Niederspannungsseite elektrische Verbraucher angeschlossen sind, werden besonders in Hybrid- oder Elektrofahrzeugen verwendet. Prinzipiell sind derartige Anordnungen aber auch in Kraftfahrzeugen einsetzbar, wobei beispielsweise nur über eine Brennkraftmaschine Antriebsleistung zur Verfügung gestellt wird. Auch in diesen Fällen wird die Batterie auf der Hochspannungsseite vorliegend als Traktionsbatterie bezeichnet. Im Falle eines Kraftfahrzeugbordnetzes beträgt die Spannung auf der Niederspannungsseite beispielsweise 12 V, währenddessen die Spannung auf der Hochspannungsseite je nach Auslegung des Systems beispielsweise im Bereich 300 V, 600 V, 750 V liegen kann. Die Höhe der Spannung hängt dabei von der Zellspannung der verwendeten Batteriezellen und der Anzahl der in Reihe geschalteten Batteriezellen ab. Für eine vorbestimmte Antriebsleistung gilt: Je höher die Ausgangsspannung der Traktionsbatterie gewählt wird, desto kleinere Ströme sind erforderlich, um die gewählte Antriebsleistung zu erreichen. Mit kleineren Strömen können die Querschnitte der elektrischen Verbindungen bei gleichen oder auch ähnlichen Leitungswiderständen geringer gewählt werden. Dieses führt in der Regel zu geringerem Gewicht. Als Traktionsbatterie wird die Batterie bezeichnet, die Energie zum Antrieb des Kraftfahrzeugs speichert und im Betrieb zur Verfügung stellt. Im Falle eine Hybridfahrzeugs kann diese Antriebsenergie der Traktionsbatterie auch zur Antriebsunterstützung eingesetzt werden, so dass parallel ein weiterer Antrieb, beispielsweise ein motorischer Antrieb, bereitsteht.

Ein gattungsgemäßes Kraftfahrzeug-Bordnetz ist beispielsweise aus der
DE 10 2007 052 750 A1 bekannt. Weiter ist aus der Druckschrift ein Verfahren zum Starten eines Hybridantriebs mittels einer Hilfsenergiequelle mit den Schritten bekannt:
Vorsehen einer E-Maschine und eines Verbrennungsmotors, die zusammen zur Erzeugung von Bewegungsenergie in dem Hybridantrieb vorgesehen sind; Vorsehen einer Traktionsbatterie zur Versorgung der E-Maschine mit Traktionsenergie, einem Bordnetz zum Starten des Verbrennungsmotors im Normalbetrieb, und einer Wandlersteuerung eines DC/DC-Wandlers, der zur Versorgung des Bordnetzes aus der Traktionsbatterie vorgesehen ist, wobei das Bordnetz die Wandlersteuerung versorgt. Wenn im Notfallbetrieb aufgrund eines Energiefehlbetrages im Bordnetz die im Bordnetz verbliebene Energie weder für den Betrieb der Wandlersteuerung noch zum Starten des Verbrennungsmotors reicht, wird ein externer Hilfsenergiebeitrag zur Wandlersteuerung zugeführt, der kleiner als der Energiefehlbetrag ist, um den Betrieb der Wandlersteuerung zumindest kurzfristig zu gewährleisten; Aktivieren des DC/DC-Wandlers durch Ansteuerung mittels der Wandlersteuerung und Einspeisen eines von der Traktionsbatterie stammenden Startvorgang-Energiebetrages in das Bordnetz durch den DC/DC-Wandler, der zusammen mit der im Bordnetz verbliebenen Energie zum Starten des Verbrennungsmotors ausreicht, wobei der Verbrennungsmotor durch Übertragen von Rotationsenergie vom Starter gestartet wird.

Nachteilig an den bekannten Kraftfahrzeug-Bordnetzen ist, dass diese ein nicht unerhebliches Gewicht und Bauraum aufweisen aufgrund der Traktionsbatterie, dem DC/DC-Wandler und der Bordnetzbatterie auf der Niederspannungsseite, die zur Versorgung der Steuergeräte dient.

Der Erfindung liegt das technische Problem zugrunde, ein Kraftfahrzeug-Bordnetz sowie ein Verfahren zum Betreiben eines Kraftfahrzeug-Bordnetzes zu schaffen, so dass insbesondere Bauraum und Gewicht eingespart werden kann.

Die Lösung des technischen Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierzu umfasst das Kraftfahrzeug-Bordnetz einen DC/DC-Wandler mit einer Hochspannungsseite und einer Niederspannungsseite, wobei an der Hochspannungsseite mindestens eine Traktionsbatterie angeschlossen ist und an der Niederspannungsseite elektrische Verbraucher angeschlossen sind, wobei der DC/DC-Wandler durch ein Steuersignal einer elektrischen Einrichtung einschaltbar oder aufweckbar ist, wobei die elektrische Einrichtung auf der Hochspannungsseite angeordnet ist oder mit einem lokal der elektrischen Einrichtung zugeordneten elektrischen Energiespeicher ausgebildet ist, mittels dessen mindestens das Steuersignal erzeugbar ist. Hierdurch ist es möglich, die Verbraucher auf der Niederspannungsseite ausschließlich über die heruntertransformierte Hochspannung der Traktionsbatterie zu versorgen, so dass auf eine Batterie auf der Niederspannungsseite verzichtet werden kann, was Gewicht, Bauraum und Kosten reduziert. Vorzugsweise ist die elektrische Einrichtung als Steuergerät ausgebildet.

In einer Ausführungsform ist die elektrische Einrichtung auf der Hochspannungsseite angeordnet, wobei der DC/DC-Wandler von der Hochspannungsseite spannungsversorgt wird. Dies bewirkt eine sehr klare Trennung, da die komplette Wandlersteuerung und -versorgung auf der Hochspannungsseite angeordnet ist. Nachteilig ist, dass die Versorgungsspannung der elektrischen Einrichtung üblicherweise geringer als die Spannung auf der Hochspannungsseite ist, so dass diese entsprechend reduziert werden muss. Erfolgt dies beispielsweise mittels ohmscher Spannungsteiler, so ergeben sich entsprechende Verluste.

In einer alternativen Ausführungsform ist die elektrische Einrichtung auf der Niederspannungsseite angeordnet, wobei die elektrische Einrichtung mit einem Kondensator ausgebildet ist, der über einen Schalter mit einer Steuerleitung des DC/DC-Wandlers verbunden ist, wobei der DC/DC-Wandler von der Hochspannungsseite spannungsversorgt wird. Durch Schließen des Schalters kann dann ein als Aufwecksignal wirkendes Signal erzeugt werden, das den DC/DC-Wandler aufweckt. Dieser kann sich in einem abgeschalteten oder einem Ruhezustand mit geringem oder keinem Ruhestrom befinden, um Energie zu sparen. Der Vorteil dieser Anordnung ist die Einsparung von Verlusten auf der Hochspannungsseite aufgrund von Spannungsteilen oder ähnlichen Anordnungen. Dabei muss nur sichergestellt sein, dass der Kondensator ausreichend lange Ladungen speichern kann, damit auch bei längeren Standzeiten ein Einschalten bzw. Aufwecken des DC/DC-Wandlers sichergestellt ist. Anstelle des Kondensators können auch andere elektrische Energiespeicher wie beispielsweise Akkumulatoren zur Anwendung kommen.

In einer weiteren alternativen Ausführungsform ist die elektrische Einrichtung mit einem lokalen Energiespeicher ausgebildet, wobei der lokale Energiespeicher mindestens beim Einschalten des DC/DC-Wandlers diesen mit Spannung versorgt. Der lokale Energiespeicher kann dabei erheblich kleiner als eine übliche Bordnetzbatterie ausgebildet sein und ist beispielsweise als Mehrlagenelektrolyt-Kondensator (Super-Cap), elektrochemischer Akkumulator oder als elektrochemische Primärzelle ausgebildet. Dies erlaubt eine separate Anordnung der elektrischen Einrichtung, so dass Änderungen oder Anpassungen auf der Hochspannungsseite bzw. Niederspannungsseite weitgehend entfallen.

Vorzugsweise erfolgt nach dem Einschalten des DC/DC-Wandlers dessen Spannungsversorgung über die Hochspannungsseite oder die Niederspannungsseite, so dass der lokale Energiespeicher nicht zu stark entladen wird.

In einer weiteren Ausführungsform wird der DC/DC-Wandler durch eine Netzwerkbotschaft, ein Signal oder einen manuellen Schalter eingeschaltet. Die Netzwerkbotschaft kann dabei beispielsweise durch ein Öffnen einer Fahrzeugtür (manuelles Öffnen oder Öffnen mit einem Funkfernbedienungssignal einer Zentralverriegelung) oder ein Keyless-Entry-Signal einer Zentralverriegelung erzeugt werden.

In einer weiteren Ausführungsform wird der DC/DC-Wandler durch eine Netzwerkbotschaft, einem Signal oder einen manuellen Schalter in einen Sleep-Modus (Ruhezustand mit geringem oder gar keinem Ruhestromverbrauch) geschaltet oder ausgeschaltet. Hierdurch kann sichergestellt werden, dass die elektrischen Verbraucher auf der Niederspannungsseite auch nach Abschalten der Zündung (Klemme 15) mit elektrischer Energie versorgt werden.

In einer weiteren Ausführungsform ist der lokale Energiespeicher durch die Hochspannungsseite oder die Niederspannungsseite aufladbar.

In einer weiteren Ausführungsform wird der lokale Energiespeicher in einem vorgebbaren zeitlichen Abstand nach Abstellen des Kraftfahrzeuges und/oder beim Laden der Traktionsbatterie aufgeladen, wobei das Laden nach Abstellen des Kraftfahrzeuges auch periodisch wiederholt werden kann. So ist sichergestellt, dass der lokale Energiespeicher stets ausreichend geladen ist, um den DC/DC-Wandler einzuschalten bzw. aufzuwecken. Es ist auch möglich, dass der DC/DC-Wandler oder eine andere Fahrzeugvorrichtung, beispielsweise ein Steuergerät, periodisch oder in vordefinierten Zeitverläufen aus dem Ruhezustand aufwacht und die Spannung oder den Energieinhalt des lokalen Energiespeichers bestimmt und abhängig von der bestimmten Spannung oder des bestimmten Energieinhalts den lokalen Energiespeicher auflädt.

In einer weiteren Ausführungsform wird vor dem Einschalten von auf der Niederspannungsseite angeordneten Hochstromverbrauchern oder Peakstrom-Verbrauchern (Hochstromverbraucher) die Spannung auf der Niederspannungsseite angehoben, um Spannungseinbrüche zu verhindern. Beispielsweise wird die Spannung von 12 V auf 14 V angehoben. Beispiele für Hochstromverbraucher sind Stellmotoren wie beispielsweise elektromotorische Fensterheber oder Servomotoren einer elektromechanischen Lenkung oder auch Heizungen, wie eine Scheibenheizung oder Sitzheizung oder auch das Einschalten des Fahrzeuglichts.

Die Ausführungen zu dem Kraftfahrzeug-Bordnetz gelten sinngemäß auch für das Verfahren zum Betreiben eines solchen Kraftfahrzeug-Bordnetzes.

Die Erfindung wird nachfolgend anhand eines bevorzugten Ausführungsbeispieles näher erläutert. Die Fig. zeigen:
- Fig. 1: ein Kraftfahrzeug-Bordnetz in einer ersten Ausführungsform,
- Fig. 2: ein Kraftfahrzeug-Bordnetz in einer zweiten Ausführungsform und
- Fig. 3: ein Kraftfahrzeug-Bordnetz in einer dritten Ausführungsform.

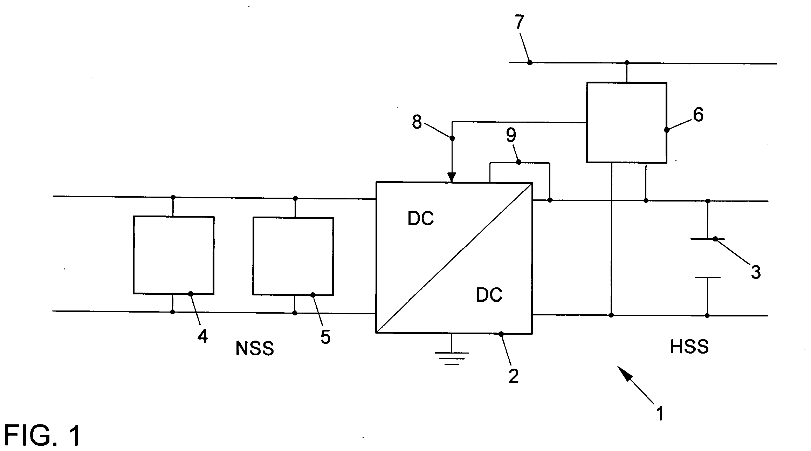

In der Fig. 1 ist ein Kraftfahrzeug-Bordnetz 1 in einer ersten Ausführungsform dargestellt. Das Kraftfahrzeug-Bordnetz 1 umfasst einen DC/DC-Wandler 2 mit einer Hochspannungsseite HSS und einer Niederspannungsseite NSS. Dabei beträgt das Spannungsniveau auf der Hochspannungsseite HSS beispielsweise 48 V, 60 V oder einige Hundert Volt (beispielsweise je nach Auslegung 300 V bis 750 V). Das Spannungsniveau auf der Niederspannungsseite NSS beträgt beispielsweise 12 V. Auf der Hochspannungsseite HSS ist eine Traktionsbatterie 3 angeordnet. Die Traktionsbatterie liefert Antriebsenergie für den Antrieb des Fahrzeugs, entweder unterstützend, beispielsweise bei Beschleunigungsvorgängen, oder auch als alleiniger Antriebsenergiespeicher. Auf der Niederspannungsseite NSS sind elektrische Verbraucher 4, 5 angeordnet. Die elektrischen Verbraucher 4, 5 sind beispielsweise Steuergeräte, elektromechanische Sensoren und Aktoren, Leuchten, Bildschirme, Radio- oder Navigationsgeräte etc. Auf der Hochspannungsseite HSS ist ein Steuergerät 6 angeordnet, das seine Versorgungsspannung von der Hochspannungsseite HSS erhält. Des Weiteren ist das Steuergerät 6 mit einem Bussystem 7, beispielsweise einem CAN- oder FlexRay-Bus verbunden. Schließlich ist das Steuergerät 6 über eine Steuerleitung 8 mit dem DC/DC-Wandler 2 verbunden. Alternativ oder ergänzend kann der DC/DC-Wandler 2 auch mit dem Bussystem 7 verbunden sein. Die Betriebsspannungsversorgung des DC/DC-Wandlers 2 erfolgt über eine Versorgungsleitung 9 über die Hochspannungsseite HSS. Dabei werden die elektrischen Verbraucher 4, 5 auf der Niederspannungsseite NSS ausschließlich über den DC/DC-Wandler 2 mit elektrischer Energie versorgt. Im Ruhezustand des Kraftfahrzeug-Bordnetzes 1 kann der DC/DC-Wandler 2 abgeschaltet sein oder sich in einem Sleep-Modus befinden. Erfasst dann das Steuergerät 6 über das Bussystem 7 des Kraftfahrzeugs eine Netzwerkbotschaft, beispielsweise von einem Keyless-Entry-System, so wird über die Steuerleitung 8 der DC/DC-Wandler 2 eingeschaltet bzw. aufgeweckt, so dass die elektrischen Verbraucher 4, 5 zum Start des Kraftfahrzeuges betriebsbereit sind. Entsprechend kann über eine Netzwerkbotschaft der DC/DC-Wandler 2 wieder ausgeschaltet bzw. in einen Sleep-Modus geschaltet werden.

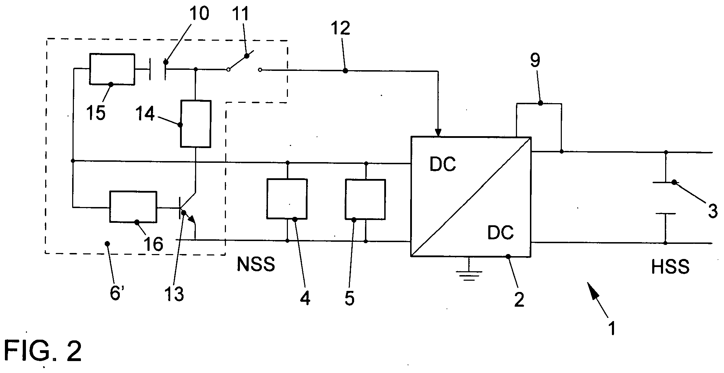

In der Fig. 2 ist eine alternative Ausführungsform eines Kraftfahrzeug-Bordnetzes 1 dargestellt, wobei gleiche Elemente wie in Fig. 1 mit gleichen Bezugszeichen versehen sind. Anstelle des Steuergerätes 6 existiert eine elektrische Einrichtung 6', die beispielsweise als Steuergerät oder Radio ausgebildet ist. Die Einrichtung 6' umfasst einen Kondensator 10, der über einen Schalter 11 mit einer Steuerleitung 12 des DC/DC-Wandlers 2 verbunden ist. Diese Steuerleitung 12 kann dabei der Steuerleitung 8 gemäß Fig. 1 entsprechen, muss es aber nicht. Dabei sei angenommen, dass im Ruhezustand der DC/DC-Wandler 2 sich im Sleep-Modus befindet und der Kondensator 10 geladen ist. Durch Schließen des Schalters 11 (manuell oder durch eine Netzwerkbotschaft) fließt ein Strompuls über die Steuerleitung 12 und weckt den DC/DC-Wandler 2 auf. Über die dann auf der Niederspannungsseite anliegende Spannung wird dann der Transistor 13 durchgeschaltet, so dass der Kondensator 10 wieder geladen werden kann. Die Widerstände 14 bis 16 dienen dabei zum Einstellen der Spannungspegel. Die eigentliche Wandlersteuerung des DC/DC-Wandlers 2 kann nach dem Aufwecken über die Einrichtung 6' oder ein anderes Steuergerät erfolgen. Um sicherzustellen, dass der Kondensator 10 stets ausreichend geladen ist, um den DC/DC-Wandler 2 aufzuwecken, wird dieser vorzugsweise periodisch, in Abhängigkeit vom Ruhestrom des Kraftfahrzeugs oder in Abhängigkeit der Restladung des Kondensators 10 geladen. Wie in der Ausführungsform gemäß Fig. 1 erfolgt die elektrische Energieversorgung aller elektrischen Verbraucher 4, 5, 6' auf der Niederspannungsseite NSS ausschließlich über den DC/DC-Wandler 2. Eine separate Bordnetzbatterie ist nicht vorhanden.

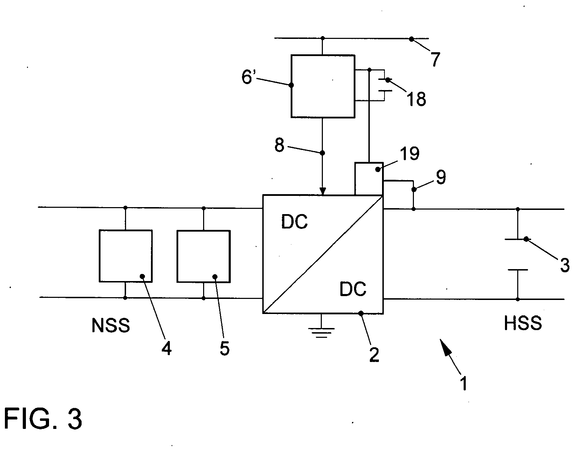

In der Fig. 3 ist schließlich eine dritte Ausführungsform eines Kraftfahrzeug-Bordnetzes 1 dargestellt. Das Kraftfahrzeug-Bordnetz 1 umfasst ein Steuergerät 6" mit einem lokalen, elektrischen Energiespeicher 18, der beispielsweise als Akkumulator ausgebildet ist. Über eine Schalteinrichtung 19 ist der lokale Energiespeicher 18 mit dem DC/DC-Wandler 2 verbunden. Ebenso ist das Steuergerät 6" über eine Steuerleitung 8 mit dem DC/DC-Wandler 2 verbunden. Im Ruhezustand ist der DC/DC-Wandler 2 abgeschaltet oder im Sleep-Modus. Empfängt dann das Steuergerät 6" über das Bussystem 7 eine entsprechende Netzwerkbotschaft, so versorgt das Steuergerät 6" über den lokalen Energiespeicher 18 den DC/DC-Wandler 2 mit Versorgungsspannung und schaltet diesen über die Steuerleitung 8 ein. Nach erfolgtem Einschalten des DC/DC-Wandlers 2 wird dann über die Schaltereinrichtung 19 auf die Spannung auf der Hochspannungsseite HSS als Versorgungsspannung für den DC/DC-Wandler 2 umgeschaltet und zusätzlich gegebenenfalls der lokale Energiespeicher 18 geladen. Alternativ kann die Ladung des lokalen Energiespeichers 18 und/oder die Spannungsversorgung des DC/DC-Wandlers 2 auch über die Niederspannungsseite NSS erfolgen. Auch in dieser Ausführungsform werden alle elektrischen Verbraucher 4, 5 auf der Niederspannungsseite NSS ausschließlich über den DC/DC-Wandler 2 mit elektrischer Energie versorgt.

### Bezugszeichenliste

- 1: Kraftfahrzeug-Bordnetz
- 2: DC/DC-Wandler
- 3: Traktionsbatterie
- 4, 5: elektrische Verbraucher
- 6, 6', 6": elektrische Einrichtung, Steuergerät
- 7: Bussystem
- 8: Steuerleitung
- 9: Versorgungsleitung
- 10: Kondensator
- 11: Schalter
- 12: Steuerleitung
- 13: Transistor
- 14 - 16: Widerstände
- 18: lokaler Energiespeicher
- 19: Schaltereinrichtung
- HSS: Hochspannungsseite
- NSS: Niederspannungsseite

## Patentansprüche

1. Kraftfahrzeug-Bordnetz (1), umfassend einen DC/DC-Wandler (2) mit einer Hochspannungsseite (HSS) und einer Niederspannungsseite (NSS), wobei an der Hochspannungsseite (HSS) mindestens eine Traktionsbatterie (3) angeschlossen ist und an der Niederspannungsseite (NSS) elektrische Verbraucher (4, 5) angeschlossen sind, **dadurch gekennzeichnet, dass**
der DC/DC-Wandler (2) durch ein Steuersignal einer elektrischen Einrichtung (6, 6', 6") einschaltbar oder aufweckbar ist, wobei die elektrische Einrichtung (6) auf der Hochspannungsseite (HSS) angeordnet ist oder mit einem lokal der elektrischen Einrichtung (6', 6") zugeordneten elektrischen Energiespeicher (10, 18) ausgebildet ist, mittels dessen mindestens das Steuersignal erzeugbar ist, wobei die elektrischen Verbraucher (4, 5) auf der Niederspannungsseite (NSS) ausschließlich über die heruntertransformierte Hochspannung der Traktionsbatterie (3) versorgt werden.

2. Kraftfahrzeug-Bordnetz nach Anspruch 1, **dadurch gekennzeichnet, dass** die elektrische Einrichtung (6) auf der Hochspannungsseite (HSS) angeordnet ist und der DC/DC-Wandler (2) von der Hochspannungsseite (HSS) spannungsversorgt wird.

3. Kraftfahrzeug-Bordnetz nach Anspruch 1, **dadurch gekennzeichnet, dass** die elektrische Einrichtung (6') auf der Niederspannungsseite (NSS) angeordnet ist, wobei die elektrische Einrichtung (6') mit einem Kondensator (10) ausgebildet ist, der über einen Schalter (11) mit einer Steuerleitung (12) des DC/DC-Wandlers (2) verbunden ist, wobei der DC/DC-Wandler (2) von der Hochspannungsseite (HSS) spannungsversorgt wird.

4. Kraftfahrzeug-Bordnetz nach Anspruch 1, **dadurch gekennzeichnet, dass** die elektrische Einrichtung (6") mit einem lokalen Energiespeicher (18) ausgebildet ist, wobei der lokale Energiespeicher (18) mindestens beim Einschalten des DC/DC-Wandlers (2) diesen mit Spannung versorgt.

5. Kraftfahrzeug-Bordnetz nach Anspruch 4, **dadurch gekennzeichnet, dass** nach dem Einschalten des DC/DC-Wandlers (2) dessen Spannungsversorgung über die Hochspannungsseite (HSS) oder die Niederspannungsseite (NSS) erfolgt.

6. Kraftfahrzeug-Bordnetz nach einem der vorangegangenen Ansprüche, **dadurch gekennzeichnet, dass** die elektrische Einrichtung (6, 6', 6") durch eine Netzwerkbotschaft oder einen manuellen Schalter (11) eingeschaltet oder aufgeweckt wird.

7. Kraftfahrzeug-Bordnetz nach einem der vorangegangenen Ansprüche, **dadurch gekennzeichnet, dass** der DC/DC-Wandler (2) durch eine Netzwerkbotschaft oder einen manuellen Schalter (11) in einen Sleep-Modus geschaltet oder ausgeschaltet wird.

8. Kraftfahrzeug-Bordnetz nach einem der vorangegangenen Ansprüche, **dadurch gekennzeichnet, dass** der lokale elektrische Energiespeicher (10, 18) durch die Hochspannungsseite (HSS) oder die Niederspannungsseite (NSS) aufladbar ist.

9. Kraftfahrzeug-Bordnetz nach Anspruch 8, **dadurch gekennzeichnet, dass** der lokale Energiespeicher (10, 18) in einem vorgebbaren zeitlichen Abstand nach Abstellen des Kraftfahrzeuges und/oder beim Laden der Traktionsbatterie (3) aufgeladen wird.

10. Kraftfahrzeug-Bordnetz nach einem der vorangegangenen Ansprüche, **dadurch gekennzeichnet, dass** vor dem Einschalten von Hochstromverbrauchern oder Peakstrom-Verbrauchern die Spannung auf der Niederspannungsseite (NSS) angehoben wird.

11. Verfahren zum Betreiben eines Kraftfahrzeug-Bordnetzes (1), wobei das Kraftfahrzeug-Bordnetz (1) einen DC/DC-Wandler (2) mit einer Hochspannungsseite (HSS) und einer Niederspannungsseite (NSS) umfasst, wobei an der Hochspannungsseite (HSS) mindestens eine Traktionsbatterie (3) angeschlossen ist und an der Niederspannungsseite (NSS) elektrische Verbraucher (4, 5) angeschlossen sind, **dadurch gekennzeichnet, dass**
der DC/DC-Wandler (2) durch ein Steuersignal einer elektrischen Einrichtung (6, 6', 6") eingeschaltet oder aufgeweckt wird, wobei die elektrische Einrichtung (6) auf der Hochspannungsseite (HSS) angeordnet ist oder mit einem lokal der elektrischen Einrichtung (6', 6") zugeordneten elektrischen Energiespeicher (10, 18) ausgebildet ist, mittels dessen mindestens das Steuersignal erzeugt wird, wobei die elektrischen Verbraucher (4, 5) auf der Niederspannungsseite (NSS) ausschließlich über die heruntertransformierte Hochspannung der Traktionsbatterie (3) versorgt werden.

## Claims

1. On-board motor vehicle electrical system (1) comprising a DC/DC converter (2) with a high-voltage side (HSS) and a low-voltage side (NSS), with at least one traction battery (3) being connected to the high-voltage side (HSS) and electrical loads (4, 5) being connected to the low-voltage side (NSS),
**characterized in that**
the DC/DC converter (2) can be switched on or woken up by a control signal of an electrical device (6, 6', 6"), with the electrical device (6) being arranged on the high-voltage side (HSS) or being designed with an electrical energy storage means (10, 18) which is locally associated with the electrical device (6', 6") and by means of which at least the control signal can be generated, wherein the electrical loads (4, 5) on the low-voltage side (NSS) are supplied exclusively by means of the high voltage, which has been transformed down, of the traction battery (3).

2. On-board motor vehicle electrical system according to Claim 1, **characterized in that** the electrical device (6) is arranged on the high-voltage side (HSS) and the DC/DC converter (2) is supplied with voltage from the high-voltage side (HSS).

3. On-board motor vehicle electrical system according to Claim 1, **characterized in that** the electrical device (6') is arranged on the low-voltage side (NSS), with the electrical device (6') being designed with a capacitor (10) which is connected to a control line (12) of the DC/DC converter (2) by means of a switch (11), with the DC/DC converter (2) being supplied with voltage from the high-voltage side (HSS).

4. On-board motor vehicle electrical system according to Claim 1, **characterized in that** the electrical device (6") is designed with a local energy storage means (18), with the local energy storage means (18) supplying voltage to the DC/DC converter (2) at least when said DC/DC converter is switched on.

5. On-board motor vehicle electrical system according to Claim 4, **characterized in that**, after the DC/DC converter (2) is switched on, voltage is supplied to it by means of the high-voltage side (HSS) or the low-voltage side (NSS).

6. On-board motor vehicle electrical system according to one of the preceding claims, **characterized in that** the electrical device (6, 6', 6") is switched on or woken up by a network message or a manual switch (11).

7. On-board motor vehicle electrical system according to one of the preceding claims, **characterized in that** the DC/DC converter (2) is switched or switched off by a network message or a manual switch (11) in a sleep mode.

8. On-board motor vehicle electrical system according to one of the preceding claims, **characterized in that** the local electrical energy storage means (10, 18) can be charged by the high-voltage side (HSS) or the low-voltage side (NSS).

9. On-board motor vehicle electrical system according to Claim 8, **characterized in that** the local energy storage means (10, 18) is charged in a predefinable time interval after the motor vehicle is turned off and/or during charging of the traction battery (3).

10. On-board motor vehicle electrical system according to one of the preceding claims, **characterized in that** the voltage on the low-voltage side (NSS) is raised before high current loads or peak current loads are switched on.

11. Method for operating an on-board motor vehicle electrical system (1), with the on-board motor vehicle electrical system (1) comprising a DC/DC converter (2) with a high-voltage side (HSS) and a low-voltage side (NSS), with at least one traction battery (3) being connected to the high-voltage side (HSS) and electrical loads (4, 5) being connected to the low-voltage side (NSS),
**characterized in that**
the DC/DC converter (2) is switched on or woken up by a control signal of an electrical device (6, 6', 6"), with the electrical device (6) being arranged on the high-voltage side (HSS) or being designed with an electrical energy storage means (10, 18) which is locally associated with the electrical device (6', 6") and by means of which at least the control signal is generated, wherein the electrical loads (4, 5) on the low-voltage side (NSS) are supplied exclusively by means of the high voltage, which has been transformed down, of the traction battery (3).

## Revendications

1. Réseau de bord de véhicule automobile (1), comprenant un convertisseur CC/CC (2) doté d'un côté haute tension (HSS) et d'un côté basse tension (NSS), au moins une batterie de traction (3) étant raccordée au côté haute tension (HSS) et des consommateurs électriques (4, 5) étant raccordés au côté basse tension (NSS), **caractérisé en ce que**
le convertisseur CC/CC (2) peut être activé ou réveillé par un signal de commande d'un dispositif électrique (6, 6', 6"), le dispositif électrique (6) étant disposé du côté haute tension (HSS) ou étant configuré avec un accumulateur d'énergie électrique (10, 18) local associé au dispositif électrique (6', 6"), au moyen duquel peut être généré au moins le signal de commande, les consommateurs électriques (4, 5) sur le côté basse tension (NSS) étant exclusivement alimentés par le biais de la haute tension abaissée par transformation de la batterie de traction (3).

2. Réseau de bord de véhicule automobile selon la revendication 1, **caractérisé en ce que** le dispositif électrique (6) est disposé du côté haute tension (HSS) et le convertisseur CC/CC (2) est alimenté électriquement par le côté haute tension (HSS).

3. Réseau de bord de véhicule automobile selon la revendication 1, **caractérisé en ce que** le dispositif électrique (6') est disposé du côté basse tension (NSS), le dispositif électrique (6') étant configuré avec un condensateur (10) qui est relié par le biais d'un commutateur (11) à une ligne de commande (12) du convertisseur CC/CC (2), le convertisseur CC/CC (2) étant alimenté électriquement par le côté haute tension (HSS).

4. Réseau de bord de véhicule automobile selon la revendication 1, **caractérisé en ce que** le dispositif électrique (6") est configuré avec un accumulateur d'énergie local (18), l'accumulateur d'énergie local (18) alimentant le convertisseur CC/CC (2) en tension au moins lors de la mise en marche de celui-ci.

5. Réseau de bord de véhicule automobile selon la revendication 4, **caractérisé en ce qu'**après la mise en marche du convertisseur CC/CC (2), son alimentation électrique s'effectue par le biais du côté haute tension (HSS) ou du côté basse tension (NSS).

6. Réseau de bord de véhicule automobile selon l'une des revendications précédentes, **caractérisé en ce que** le dispositif électrique (6, 6', 6") est mis en marche ou réveillé par un message du réseau ou un commutateur manuel (11).

7. Réseau de bord de véhicule automobile selon l'une des revendications précédentes, **caractérisé en ce que** le convertisseur CC/CC (2) est commuté dans un mode de veille ou mis à l'arrêt par un message du réseau ou un commutateur manuel (11).

8. Réseau de bord de véhicule automobile selon l'une des revendications précédentes, **caractérisé en ce que** l'accumulateur d'énergie local (10, 18) peut être chargé par le côté haute tension (HSS) ou le côté basse tension (NSS).

9. Réseau de bord de véhicule automobile selon la revendication 8, **caractérisé en ce que** l'accumulateur d'énergie local (10, 18) est chargé dans un intervalle de temps pouvant être prédéfini après avoir arrêté le véhicule automobile et/ou lors de la charge de la batterie de traction (3).

10. Réseau de bord de véhicule automobile selon l'une des revendications précédentes, **caractérisé en ce que** la tension du côté basse tension (NSS) est relevée avant la mise en marche des consommateurs à courant fort ou des consommateurs à courant de crête.

11. Procédé pour faire fonctionner un réseau de bord de véhicule automobile (1), le réseau de bord de véhicule automobile (1) comprenant un convertisseur CC/CC (2) doté d'un côté haute tension (HSS) et d'un côté basse tension (NSS), au moins une batterie de traction (3) étant raccordée au côté haute tension (HSS) et des consommateurs électriques (4, 5) étant raccordés au côté basse tension (NSS), **caractérisé en ce que**
le convertisseur CC/CC (2) est activé ou réveillé par un signal de commande d'un dispositif électrique (6, 6', 6"), le dispositif électrique (6) étant disposé du côté haute tension (HSS) ou étant configuré avec un accumulateur d'énergie électrique (10, 18) local associé au dispositif électrique (6', 6"), au moyen duquel est généré au moins le signal de commande, les consommateurs électriques (4, 5) sur le côté basse tension (NSS) étant exclusivement alimentés par le biais de la haute tension abaissée par transformation de la batterie de traction (3).
